(19)

Europäisches Patentamt
European Patent Office
Office européen des brevets

(11)     **EP 4 510 237 A1**

(12)     **EUROPEAN PATENT APPLICATION**
published in accordance with Art. 153(4) EPC

(43) Date of publication:
**19.02.2025   Bulletin 2025/08**

(21) Application number: **22950681.1**

(22) Date of filing: **15.07.2022**

(51) International Patent Classification (IPC):
***H01M 4/62*** *(2006.01)*

(52) Cooperative Patent Classification (CPC):
**H01M 4/62;** Y02E 60/10

(86) International application number:
**PCT/CN2022/105911**

(87) International publication number:
**WO 2024/011561 (18.01.2024 Gazette 2024/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited**
**Ningde, Fujian 352100 (CN)**

(72) Inventors:
 • **BAI, Wenlong**
  **Ningde, Fujian 352100 (CN)**
 • **WU, Yiyang**
  **Ningde, Fujian 352100 (CN)**

 • **YOU, Xingyan**
  **Ningde, Fujian 352100 (CN)**
 • **WU, Baozhen**
  **Ningde, Fujian 352100 (CN)**
 • **WANG, Yuwen**
  **Ningde, Fujian 352100 (CN)**
 • **ZHENG, Wei**
  **Ningde, Fujian 352100 (CN)**
 • **YE, Yonghuang**
  **Ningde, Fujian 352100 (CN)**
 • **WU, Kai**
  **Ningde, Fujian 352100 (CN)**

(74) Representative: **Jacob, Reuben Ellis**
**Maucher Jenkins
Seventh Floor Offices
Artillery House
11-19 Artillery Row
London SW1P 1RT (GB)**

(54)     **POSITIVE ELECTRODE MATERIAL COMPOSITION, POSITIVE ELECTRODE,
RECHARGEABLE BATTERY AND ELECTRIC APPARATUS**

(57)     Provided in the present application are a positive electrode material composition, a positive electrode, a rechargeable battery and an electric apparatus. The positive electrode material composition of the present application contains a positive electrode active material and dielectric material particles, wherein an A-value of each dielectric material particle is 50-200, and $A = [\varepsilon/(c/a)]$, $\varepsilon$ being the relative dielectric constant of the dielectric material particle, c being the length of a c-axis of a unit cell of the dielectric material particle, and a being the length of an a-axis of the unit cell of the dielectric material particle.

**FIG. 2**

**Description**

**TECHNICAL** FIELD

The present application relates to the technical field of batteries, and in particular to a positive electrode material composition, a positive electrode, a secondary battery and an electrical apparatus.

BACKGROUND

In recent years, with the increasingly wide use of secondary batteries, secondary batteries are widely used in energy storage power systems such as water power, thermal power, wind power and solar power stations, as well as power tools, electric bicycles, electric motorcycles, electric vehicles, military equipment, aerospace and other fields. Due to the great development of secondary batteries, higher requirements have also been put forward for their energy density, cycling performance, and the like.

The wide application of lithium-ion batteries in all-electric vehicles is accelerating. However, compared with traditional fuel vehicles, the problems of mileage anxiety and long charging time are the main obstacles to the development of electric vehicles. Therefore, improving fast-charging capability has become a general development goal for battery manufacturers and vehicle factories.

SUMMARY OF THE INVENTION

In view of the above-mentioned topics, the present application provides a novel positive electrode material composition, a positive electrode, a secondary battery and an electrical apparatus, which will be described below, respectively.

In a first aspect, the present application provides a positive electrode material composition comprising a positive electrode active material and a dielectric material particle;

wherein, the dielectric material particle has an A value of 50-200, wherein

$$A=[\varepsilon/(c/a)]$$

$\varepsilon$ is the relative dielectric constant of the dielectric material particle;
c is the c-axis length of the unit cell of the dielectric material particle,
a is the a-axis length of the unit cell of the dielectric material particle.

The positive electrode material composition based on the above solution is used for a secondary battery, and the secondary battery exhibits one or more of the following improved performances: increased specific capacity, improved first-cycle coulombic efficiency, reduced charging resistance, and longer cycle life.

In the above solution, the A value of the dielectric material particle is 50-200, which is critical for improving the performance of the secondary battery because: during charging and discharging of the secondary battery (such as a lithium-ion battery) at a large current, cations in the positive electrode film will migrate to the interface between the positive electrode active material and the electrolyte solution. As there is a solid electrolyte interface film (CEI film) on the surface of the positive electrode active material, and the barrier for intercalation and deintercalation of solvated cations in the CEI film is relatively high, some cations will accumulate at the interface, resulting in the occurrence of concentration polarization. At the same time, the impedance of the CEI film will slow down the migration rate of cations in the CEI film, thereby resulting in a higher discharge DCR, and reducing the power output of the battery cell as a whole. When the dielectric material particle is excited by an electric field, the positive and negative charge centers of the material center will be separated, thereby generating an internal reverse electric field, and the reverse electric field will form a three-phase interface at the three-phase junction of the electrolyte solution, the dielectric material particle and the positive electrode active material, and the three-phase interface is relatively thin, which will promote the fast intercalation and deintercalation of lithium ions. The A value of the dielectric material particles is 50-200, which enables a significant increase in the rate of intercalation and deintercalation of the solvated lithium ions in the CEI film.

In some embodiments, the relative dielectric constant of the dielectric material particle is 80 to 200. Based on this solution, the dielectric constant of the dielectric material particle has an impedance matching effect with the dielectric constant of the electrolyte solution, and the secondary battery exhibits one or more of the following improved performances: increased specific capacity, improved first-cycle coulombic efficiency, reduced charging resistance, and longer cycle life.

In some embodiments, the c-axis length of the unit cell of the dielectric material particle is 0.3nm-0.5nm. Based on this solution, the dielectric constant of the dielectric material particle has an impedance matching effect with the dielectric constant of the electrolyte solution, and the secondary battery exhibits one or more of the following improved performances: increased specific capacity, improved first-cycle coulombic efficiency, reduced charging resistance, and longer cycle life.

In some embodiments, the a-axis length of the unit cell of the dielectric material particle is 0.3nm-0.5nm. Based on this solution, the dielectric constant of the dielectric material particle has an impedance matching effect with the dielectric constant of the electrolyte solution, and the secondary battery exhibits one or more of the following improved performances: increased specific capacity, improved first-cycle coulombic efficiency, reduced charging resistance, and longer cycle life.

In some embodiments, the dielectric material particle is selected from one or more of a barium titanate particle, a lead titanate particle, a lithium niobate particle, a lead zirconate titanate particle, a lead metaniobate particle, and a lead barium lithium niobate particle.

In some embodiments, the positive electrode active material is selected from one or more of the following:

(1) Layered oxide-type positive electrode active material;
(2) Spinel-type positive electrode active material;
(3) Polyanionic positive electrode active material.

In some embodiments, the dielectric material particle is a tetragonal barium titanate particle. Based on this solution, the secondary battery exhibits one or more of the following improved performances: increased specific capacity, improved first-cycle coulombic efficiency, reduced charging resistance, and longer cycle life.

In some embodiments, the dielectric material particle has a volume median particle diameter of 50-100nm. Based on this solution, the dielectric material particle can be well bonded to the surface of the positive electrode active material, and the secondary battery exhibits one or more of the following improved performances: increased specific capacity, improved first-cycle coulombic efficiency, reduced charging resistance, and longer cycle life.

In some embodiments, the positive electrode active material has a volume median particle diameter of 4-10$\mu$m. Based on this solution, the dielectric material particle can be well bonded to the surface of the positive electrode active material, and the secondary battery exhibits one or more of the following improved performances: increased specific capacity, improved first-cycle coulombic efficiency, reduced charging resistance, and longer cycle life.

In some embodiments, the volume median particle diameter ratio of the dielectric material particle to the positive electrode active material is 1:40-1:200. Based on this solution, the dielectric material particle can be well bonded to the surface of the positive electrode active material, and the secondary battery exhibits one or more of the following improved performances: increased specific capacity, improved first-cycle coulombic efficiency, reduced charging resistance, and longer cycle life.

In some embodiments, the dielectric material particle is attached to the surface of the positive electrode active material.

In some embodiments, the mass ratio of the dielectric material particle to the positive electrode active material is 1:100-10:100.

In a second aspect, the present application provides a positive electrode containing any one of the above positive electrode material compositions.

In a third aspect, the present application provides a secondary battery containing a positive electrode film layer and an electrolyte solution;

wherein, the positive electrode film layer comprises any one of the above positive electrode material compositions, and the positive electrode material composition comprises the positive electrode active material and the dielectric material particle;
wherein, the relative dielectric constant ratio of the dielectric material particle to the electrolyte solution is 50-200:30-90. Based on this, it is possible to further enable the surface of the material having relative dielectric constant to have an impedance matching effect with the electrolyte solution, which facilitates the fast deintercalation and intercalation of the solvated lithium ions.

In a fourth aspect, the present application provides an electrical apparatus, comprising any one of the above secondary battery.

Beneficial effects

The positive electrode material composition, the positive electrode, the secondary battery and the electrical apparatus of the present application have one or more of the following beneficial effects:

(1) The positive electrode material composition is used for a secondary battery, and the secondary battery exhibits an increased specific capacity;
(2) The positive electrode material composition is used for a secondary battery, and the secondary battery exhibits an improved first-cycle coulombic efficiency;
(2) The positive electrode material composition is used for a secondary battery, and the secondary battery exhibits a reduced charging resistance;
(3) The positive electrode material composition is used for a secondary battery, and the secondary battery exhibits a longer cycle life.

## DESCRIPTION OF DRAWINGS

Fig. 1 is a schematic view of a secondary battery according to an embodiment of the present application.
Fig. 2 is a schematic view of an electrode film according to an embodiment of the present application.
Fig. 3 is a schematic view of a secondary battery according to an embodiment of the present application.
Fig. 4 is an exploded view of the secondary battery according to an embodiment of the present application as shown in Fig. 3.
Fig. 5 is a schematic view of a battery module according to an embodiment of the present application.
Fig. 6 is a schematic view of a battery pack according to an embodiment of the present application.
Fig. 7 is an exploded view of the battery pack according to an embodiment of the present application as shown in Fig. 6.
Fig. 8 is a schematic view of an electrical apparatus in which a secondary battery is used as a power source according to an embodiment of the present application.

Description of reference numerals:
1 Battery pack; 2 Upper box body; 3 Lower box body; 4 Battery module; 5 Secondary battery; 51 Case; 52 Electrode assembly; 53 Top cover assembly; Positive electrode film layer 101; Negative electrode film layer 102; Separator 300; Positive electrode active material 201; Dielectric material particle 202.

## DETAILED DESCRIPTION

Hereinafter, embodiments that specifically disclose a negative electrode active material and its manufacturing method, a positive electrode plate, a negative electrode plate, a secondary battery, a battery module, a battery pack, and an apparatus of the present application will be described in detail with reference to the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.
A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. In addition, if the minimum range values 1 and 2 are listed, and if the maximum range values 3, 4 and 5 are listed, the following ranges are all contemplated: 1-3, 1-4, 1-5, 2-3, 2-4 and 2-5. In the present application, unless otherwise specified, the numerical range "a-b" means an abbreviated representation of any combination of real numbers between a to b, wherein a and b are both real numbers. For example, the numerical range "0-5" means that all the real numbers between "0-5" have been listed herein, and "0-5" is only the abbreviated representation of these numerical combinations. Additionally, when a parameter is expressed as an integer greater than or equal to 2, it is equivalent to disclosing that the parameter is, for example, an integer of 2, 3, 4, 5, 6, 7, 8, 9, 10, 11, 12, and the like.
Unless otherwise specified, all embodiments and optional embodiments of the present application may be combined with each other to form new technical solutions.
Unless otherwise specified, all technical features and optional technical features of the present application may be combined with each other to form new technical solutions.
Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further comprise step (c), meaning that step (c) may be added to the method in any order. For example, the method may comprise steps (a), (b) and (c), or may also comprise steps (a), (c) and (b), or may also comprise steps (c), (a) and (b), and so on.

Unless otherwise specifically stated, the "including" and "comprising" mentioned in the present application mean open-ended, or may be closed-ended. For example, the "including" and "comprising" may indicate that it is also possible to include or comprise other components not listed, and it is also possible to include or comprise only the listed components.

If not specifically stated, the term "or" is inclusive in the present application. By way of example, the phrase "A or B" means "A, B, or both A and B". More specifically, the condition "A or B" is satisfied by any one of the following conditions: A is true (or present) and B is false (or absent); A is false (or absent) and B is true (or present); or both A and B are true (or present).

[Secondary battery]

Secondary batteries, also known as rechargeable batteries or storage batteries, refer to batteries that, after being discharged, can activate the active materials by charging for continuous use.

Generally, a secondary battery comprises a positive electrode plate, a negative electrode plate, a separator and an electrolyte solution. During charging and discharging process of the battery, active ions (for example, lithium ions) are intercalated and deintercalated back and forth between the positive electrode plate and the negative electrode plate. The separator is provided between the positive electrode plate and the negative electrode plate, and mainly functions to prevent a short circuit between the positive electrode and the negative electrode while allowing active ions to pass through. The electrolyte solution mainly serves to conduct active ions between the positive electrode plate and the negative electrode plate.

[Positive electrode material composition]

In a first aspect, the present application provides a positive electrode material composition comprising a positive electrode active material and a dielectric material particle;

wherein, the dielectric material particle has an A value of 50-200, wherein

$$A=[\varepsilon/(c/a)]$$

$\varepsilon$ is the relative dielectric constant of the dielectric material particle;
c is the c-axis length of the unit cell of the dielectric material particle,
a is the a-axis length of the unit cell of the dielectric material particle.

With the positive electrode of the secondary battery with the above-mentioned positive electrode material composition, the secondary battery exhibits one or more of the following improvements: increased specific capacity, increased first-cycle coulombic efficiency, reduced charging resistance, and prolonged cycle life.

In the above solution, the A value is 50-200, which is critical for improving the performance of the battery because: during charging and discharging of the battery (such as a lithium-ion battery) at a large current, cations in the positive electrode film will migrate to the interface between the positive electrode active material and the electrolyte solution. As there is a solid electrolyte interface film (CEI film) on the surface of the positive electrode active material, and the barrier for intercalation and deintercalation of solvated cations in the CEI film is relatively high, some cations will accumulate at the interface, resulting in the occurrence of concentration polarization. At the same time, the impedance of the CEI film will slow down the migration rate of cations in the CEI film, thereby resulting in a higher discharge DCR, and reducing the power output of the battery cell as a whole. When the dielectric material particle is excited by an electric field, the positive and negative charge centers of the material center will be separated, thereby generating an internal reverse electric field, and the reverse electric field will form a three-phase interface at the three-phase junction of the electrolyte solution, the dielectric material particle and the positive electrode active material, and the three-phase interface is relatively thin, which will promote the fast intercalation and deintercalation of lithium ions. When the dielectric material has an A value of 50-200, the solvated lithium ions can be fastly intercalated and deintercalated in the CEI film, thereby improving one or more performances of the battery, such as increasing capacity, increasing first-cycle coulombic efficiency, reducing charging resistance, and improving cycle life.

**In** some embodiments, the term "unit cell" refers to a parallelepiped unit capable of completely reflecting the chemical structural features of the three-dimensional spatial distribution of atoms within the crystal. A unit cell is able to maintain the symmetry of the crystal structure, and is also the smallest unit mentioned in the crystal. The shape and size of a unit cell are related to the lengths of its three axes a, b and c, i.e. the three side lengths of the parallelepiped unit. The c-axis may correspond to the longest axis in the unit cell, and the a-axis may correspond to the shortest axis in the unit cell.

The wavelength of X-ray (0.01nm-10nm) is in the same order of magnitude as the unit cell parameters, and the unit cell parameters of a crystal are generally measured by X-ray diffraction method.

In some embodiments, the dielectric material particle is of a crystal system with unit cell parameters conforming to a=b, a≠c, b#c, and the a-axis, b-axis and c-axis being perpendicular to one another.

In some embodiments, the A value of the positive electrode material composition is 50-60, 60-70, 70-80, 80-90, 90-100, 100-110, 110-120, 120-130, 130-140, 140-150, 150-160, 160-170, 170-180, 180-190 or 190-200.

In some embodiments, the relative dielectric constant of the dielectric material particle is 80 to 200. Based on this solution, it is possible to further enable the surface of the material having relative dielectric constant to have an impedance matching effect with the electrolyte solution, and the fast-charging performance of the secondary battery is better.

In some embodiments, the term "relative dielectric constant" refers to a relative dielectric constant ($\varepsilon_r$), which is the relative dielectric constant of a material divided by the relative dielectric constant of vacuum ($\varepsilon_0$).

In some embodiments, the dielectric constant refers to a dielectric constant at room temperature (25±5°C), which has a meaning well known in the art and can be measured using instruments and methods known in the art. For example, a ferroelectric material can be made into a round sample, and then tested for capacitance C using a LCR tester, and the dielectric constant $\varepsilon$ is obtained by calculation according to the formula: $\varepsilon=(C\times d)/(\varepsilon_0\times A)$. C represents capacitance in Farads (F); d represents sample thickness in cm; A represents sample area in cm$^2$; $\varepsilon_0$ represents vacuum dielectric constant, and $\varepsilon_0 = 8.854\times 10\text{-}14$ F/cm. In the present application, the test conditions can be 1KHz, 1.0V, and 25 ±5°C. The test standard can be based on GB/T 11297.11-2015. When preparing samples, reference can be made to Chinese patent application CN114217139A.

In some embodiments, the relative dielectric constant of the present application can be determined by a relative dielectric constant tester, with particular reference to GB/T5594.4-1985, and a ZJD-C relative dielectric constant tester from Beijing Zhonghang Times Instrument Equipment Co. Ltd. can be selected as the instrument.

In some embodiments, the relative dielectric constant of the dielectric material particle is 50-60, 60-70, 70-80, 80-90, 90-100, 100-110, 110-120, 120-130, 130-140, 140-150, 150-160, 160-170, 170-180, 180-190 or 190-200. Based on this solution, the dielectric constant of the dielectric material particle has an impedance matching effect with the dielectric constant of the electrolyte solution, and the secondary battery exhibits one or more of the following improved performances: increased specific capacity, improved first-cycle coulombic efficiency, reduced charging resistance, and longer cycle life.

In some embodiments, the c-axis length of the unit cell of the dielectric material particle is 0.3nm-0.5nm (for example, 0.3nm-0.34nm, 0.34nm-0.38nm, 0.38nm-0.40nm, 0.40nm-0.42nm, 0.42nm-0.46nm, and 0.46nm-0.5nm). Based on this solution, the dielectric constant of the dielectric material particle has an impedance matching effect with the dielectric constant of the electrolyte solution, and the secondary battery exhibits one or more of the following improved performances: increased specific capacity, improved first-cycle coulombic efficiency, reduced charging resistance, and longer cycle life.

In some embodiments, the a-axis length of the unit cell of the dielectric material particle is 0.3nm-0.5nm (for example, 0.3nm-0.34nm, 0.34nm-0.38nm, 0.38nm-0.40nm, 0.40nm-0.42nm, 0.42nm-0.46nm, and 0.46nm-0.5nm). Based on this solution, the dielectric constant of the dielectric material particle has an impedance matching effect with the dielectric constant of the electrolyte solution, and the secondary battery exhibits one or more of the following improved performances: increased specific capacity, improved first-cycle coulombic efficiency, reduced charging resistance, and longer cycle life.

In some embodiments, the ratio (c/a) of the c-axis length to a-axis length of the unit cell of the dielectric material particle is 0.3-0.5:0.3-0.5, for example 0.38-0.42:0.38-0.42, for example 0.401-0.405:0.395-0.399. Based on this solution, the dielectric constant of the dielectric material particle has an impedance matching effect with the dielectric constant of the electrolyte solution, and the secondary battery exhibits one or more of the following improved performances: increased specific capacity, improved first-cycle coulombic efficiency, reduced charging resistance, and longer cycle life.

In some embodiments, the dielectric material particle is selected from one or more of a barium titanate particle, a lead titanate particle, a lithium niobate particle, a lead zirconate titanate particle, a lead metaniobate particle, and a lead barium lithium niobate particle. Based on this solution, the dielectric constant of the dielectric material particle has an impedance matching effect with the dielectric constant of the electrolyte solution, and the secondary battery exhibits one or more of the following improved performances: increased specific capacity, improved first-cycle coulombic efficiency, reduced charging resistance, and longer cycle life.

In some embodiments, the general chemical formula of lead zirconate titanate is $Pb_xZr_{1-x}TiO_3$, wherein $0 < x < 1$.

In some embodiments, the general chemical formula of lead barium lithium niobate is $(Pb_xBa_{1-x})_4Li_2Nb_{10}O_{30}$, wherein $0 < x < 1$.

In some embodiments, the positive electrode active material is selected from one or more of the following:

(1) Layered oxide-type positive electrode active material (for example, a ternary material);
(2) Spinel-type positive electrode active material (for example, a lithium manganate material);
(3) Polyanionic positive electrode active material (for example, a lithium iron phosphate material).

In some embodiments, the dielectric material particle is a barium titanate particle of tetragonal crystalline form.
In some embodiments, the term "tetragonal crystalline form" denotes a crystal structure having a unit cell comprising three axes, two of which have the same length and are at right angles to each other, and the third axis is perpendicular to the other two axes.
In some embodiments, the dielectric material particle has a volume median particle diameter of 50-100nm, for example 50-60 nm, 60-70 nm, 70-80 nm, 80-90 nm or 90-100 nm. Based on this, the dielectric material particle is well bonded to the positive electrode active material, and will not easily detach from the positive electrode active material.
In some embodiments, the positive electrode active material has a volume median particle diameter of 4-10$\mu$m, for example 4-5$\mu$m, 5-6$\mu$m, 6-7$\mu$m, 7-8$\mu$m, 8-9$\mu$m or 9-10$\mu$m. Based on this, the dielectric material particle is well bonded to the positive electrode active material, and will not easily detach from the positive electrode active material.
In some embodiments, the volume median particle diameter ratio of the dielectric material particle to the positive electrode active material is 1:40-1:200, for example 1:50-1:100, for example 1:50-70. Based on this, the dielectric material particle is well bonded to the positive electrode active material, and will not easily detach from the positive electrode active material.
In some embodiments, the dielectric material particle is attached to the surface of the positive electrode active material.
In some embodiments, the term "attached" has its common meaning, such as contacted, jioned, bonded or adhered. The process involved in attaching the dielectric material particle to the positive electrode active material may include: chemical ionic bonding and covalent bonding, surface tension, van der Waals force, capillary force, electrostatic force, attachment, and any other physical process that joins two entities. For example, a binder can be used to adhere the dielectric material particle to the surface of the positive electrode active material. For example, a pressure can be applied to press the dielectric material particle on the surface of the positive electrode active material.
In some embodiments, the mass ratio of the dielectric material particle to the positive electrode active material is 1:100-10:100, for example 3:100-7:100.
In a second aspect, the present application provides a positive electrode containing any one of the above positive electrode material composition.
In a third aspect, the present application provides a secondary battery containing a positive electrode film layer and an electrolyte solution;

wherein, the positive electrode film layer comprises any one of the above positive electrode material composition, and the positive electrode material composition comprises the positive electrode active material and the dielectric material particle;
wherein, the relative dielectric constant ratio of the dielectric material particle to the electrolyte solution is 50-200:30-90. Based on this, it is possible to further enable the surface of the material having relative dielectric constant to have an impedance matching effect with the electrolyte solution, which facilitates the fast deintercalation and intercalation of the solvated lithium ions.

In a fourth aspect, the present application provides an electrical apparatus, comprising any one of the above secondary battery.

[Positive electrode plate]

In some embodiments, the positive electrode plate generally comprises a positive electrode current collector and a positive electrode film layer provided on at least one surface of the positive electrode current collector, wherein the positive electrode film layer comprises a positive electrode active material.
As an example, the positive electrode current collector has two opposite surfaces in its own thickness direction, and the positive electrode film layer is arranged on either or both of the two opposite surfaces of the positive electrode current collector.
In some embodiments, the positive electrode current collector can be a metal foil or a composite current collector. For example, an aluminum foil can be used as the metal foil. The composite current collector may comprise a high molecular material substrate layer and a metal layer formed on at least one surface of the high molecular material substrate layer. The composite current collector can be formed by forming a metal material (aluminium, aluminium alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the positive electrode active material may be a positive electrode active material for batteries well known in the art. As an example, the positive electrode active material may include at least one of the following materials: lithium-containing phosphate with olivine structure, lithium transition metal oxide, and their respective modified compounds. However, the present application is not limited to these materials, and other conventional materials useful as positive electrode active materials for batteries can also be used. It is possible to use only one of these positive electrode active materials alone, or to use more than two in combination. Here, examples of the lithium transition metal oxide may include, but are not limited to, at least one of lithium-cobalt oxide (such as $LiCoO_2$), lithium-nickel oxide (such as $LiNiO_2$), lithium-manganese oxide (such as $LiMnO_2$ and $LiMn_2O_4$), lithium-nickel-cobalt oxide, lithium-manganese-cobalt oxide, lithium-nickel-manganese oxide, lithium-nickel-cobalt-manganese oxide (such as $LiNi_{1/3}Co_{1/5}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$), lithium-nickel-cobalt-aluminum oxide (such as $LiNi_{0.85}Co_{0.15}Al_{0.05}O_2$) and their respective modified compounds. Examples of the lithium-containing phosphate with olivine structure may include, but are not limited to, at least one of lithium iron phosphate (such as $LiFePO_4$ (also abbreviated as LFP)), lithium iron phosphate-carbon composite, lithium manganese phosphate (such as $LiMnPO_4$), lithium manganese phosphate-carbon composite, lithium manganese iron phosphate, and lithium manganese iron phosphate-carbon composite.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer further optionally comprises a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate can be prepared by dispersing the components for preparing the positive electrode plate, for example, the positive electrode active material, the conductive agent, the binder and any other components in a solvent (for example, N-methyl pyrrolidone) to form a positive electrode slurry; and coating the positive electrode slurry on a positive electrode current collector, followed by oven drying, cold pressing and other procedures, to obtain the positive electrode plate.

[Electrolyte]

The electrolyte serves to conduct ions between the positive electrode plate and the negative electrode plate. The type of the electrolyte is not particularly limited in the present application, and can be selected according to requirements. For example, the electrolyte may be in a liquid state, a gel state, or an all-solid state.

In some embodiments, the electrolyte is in a liquid state, and comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution further optionally comprises an additive. As an example, the additive may comprise a negative electrode film-forming additive, positive electrode film-forming additive, and may further comprise additives that can improve certain battery properties, such as additives that improve battery overcharge performance, additives that improve battery high or low temperature performance, and the like.

[Separator]

In some embodiments, the secondary battery further comprises a separator. The type of the separator is not particularly limited in the present application, and any well-known separator with a porous structure having good chemical stability and mechanical stability may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some embodiments, the positive electrode plate, the negative electrode plate, and the separator can be made into an electrode assembly by a winding process or a stacking process.

In some embodiments, the secondary battery may comprise an outer package. The outer package can be used to encapsulate the above-mentioned electrode assembly and electrolyte.

In some embodiments, the outer package of the secondary battery may be a hard shell, e.g., a hard plastic shell, an aluminum shell, a steel shell, etc. The outer package of the secondary battery may also be a soft pack, such as a bag-type soft pack. The material of the soft pack can be plastic, and as plastic, polypropylene, polybutylene terephthalate, and polybutylene succinate can be cited.

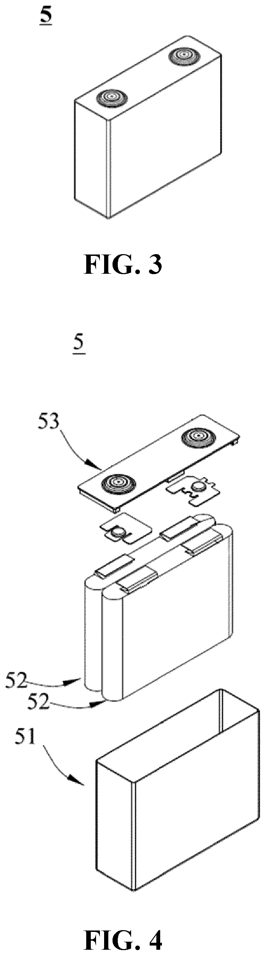

The present application has no particular limitation on the shape of the secondary battery, which can be cylindrical, square or any other shape. For example, Fig. 3 is an example of a secondary battery 5 having a square structure.

In some embodiments, referring to Fig. 4, the outer package may comprise a case 51 and a cover plate 53. Here, the case 51 can comprise a bottom plate and a side plate connected to the bottom plate, with the bottom plate and the side plate enclosing to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 contained in the secondary battery 5 may be one or more, which can be selected by those skilled in the art according to specific actual requirements.

In some embodiments, the secondary batteries may be assembled into a battery module, and the number of the secondary batteries contained in the battery module may be one or more, and the specific number may be selected by those skilled in the art according to the application and capacity of the battery module.

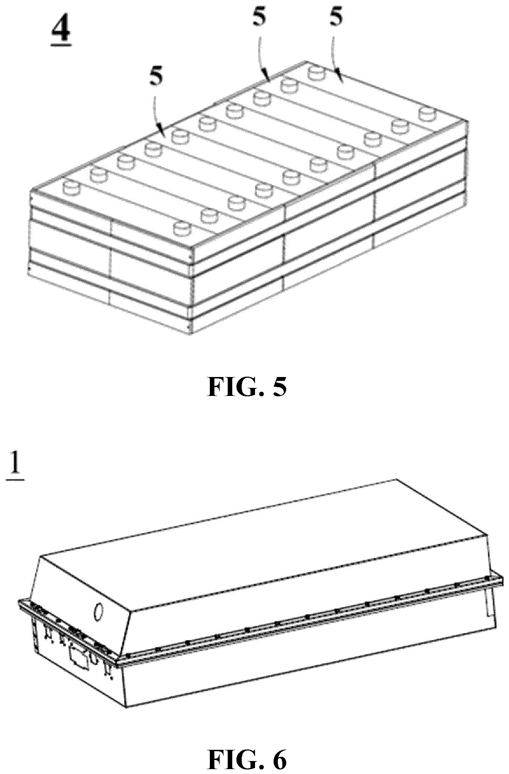

Fig. 5 shows a battery module 4 as an example. Referring to Fig. 5, in the battery module 4, a plurality of secondary batteries 5 may be sequentially arranged along a length direction of the battery module 4. Of course, any other arrangement is also possible. The plurality of secondary batteries 5 may further be fixed by fasteners.

Optionally, the battery module 4 can further comprise a shell having an accommodating space, in which the plurality of secondary batteries 5 are accommodated.

In some embodiments, the battery module may further be assembled into a battery pack, the number of battery module contained in the battery pack may be one or more, and the specific number can be selected by those skilled in the art according to the use and capacity of the battery pack.

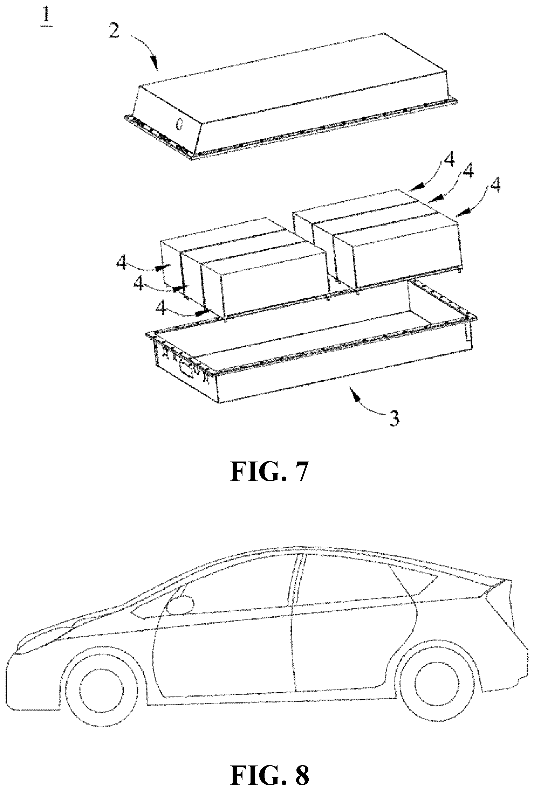

Figs. 6 and 7 show a battery pack 1 as an example. Referring to Figs. 6 and 7, the battery pack 1 may comprise a battery box and a plurality of battery modules 4 provided in the battery box. The battery box comprises an upper box body 2 and a lower box body 3, the upper box body 2 can cover the lower box body 3 to form a closed space for accommodating the battery modules 4. The plurality of battery modules 4 may be arranged in the battery box in any manner.

In addition, the present application further provides an electrical apparatus, and the electrical apparatus comprises at least one of the secondary batteries, the battery module, or the battery pack provided in the present application. The secondary battery, battery module, or battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack can be selected according to the requirements during use.

Fig. 8 is an example of an electrical apparatus. The electrical apparatus is an all-electric vehicle, a hybrid electric vehicle or a plug-in hybrid electric vehicle, and the like. In order to meet the requirements of the electrical apparatus for high power and high energy density of secondary batteries, a battery pack or a battery module may be used.

Examples of the present application will be described hereinafter. The examples described below are exemplary and only used to explain the present application, and are not to be construed as limiting the present application. Where specific techniques or conditions are not specified in the examples, the techniques or conditions described in the literatures of the art or the product specifications are followed. All of the used reagents or instruments which are not specified with the manufacturer are conventional commercially-available products.

Preparation example 1

Barium titanate particles with different relative dielectric constants were prepared.

Commercially available raw material barium titanate particles (tetragonal crystal system, abbreviated as BTO raw material) with a particle diameter of 100nm and a relative dielectric constant of 30 were provided.

The raw material barium titanate particles are ball milled to obtain barium titanate particles with different relative dielectric constants. A planetary ball mill was used for ball milling, and an agate ball was used as the grinding ball, the ratio of ball to material was 2: 1, and barium titanate particles with different relative dielectric constant ($\sigma$) were obtained by adjusting the ball milling time (t). The corresponding relationship between the ball milling parameters and the relative dielectric constants of the barium titanate particles was shown in the Table below.

Table 1

| | Ball milling time (t) | Dv50 (nm) | Relative dielectric constant | A value |
|---|---|---|---|---|
| BTO (raw material) | N/A | 100nm | 30 | 30 |
| BTO-60 | 90min | 100nm | 60 | 59.3712 |
| BTO-90 | 120min | 100nm | 90 | 89.0542 |
| BTO-120 | 150min | 100nm | 120 | 118.737 |
| BTO-150 | 180min | 100nm | 150 | 148.432 |
| BTO-180 | 200min | 100nm | 180 | 178.112 |
| BTO-40 | 20min | 100nm | 40 | 40 |
| BTO-300 | 300min | 100nm | 300 | 297 |
| * A=$[\varepsilon/(c/a)]$, $\varepsilon$ was the relative dielectric constant of barium titanate particle; c is the c-axis length of the unit cell of barium titanate particle, and a was the a-axis length of the unit cell of barium titanate particle. | | | | |

The test method of relative dielectric constant of barium titanate particle was as follows: in the present application, the relative dielectric constants of the barium titanate particle and the electrolyte solution could be measured by a relative dielectric constant tester, with particular reference to GB/T5594.4-1985, and a ZJD-C relative dielectric constant tester from Beijing Zhonghang Times Instrument Equipment Co. Ltd. could be selected as the instrument

The test method of a value and c value of barium titanate particle was as follows: powder X-ray diffraction analysis was performed on the barium titanate particle, and the obtained XRD pattern was refined and calculated in conjunction with Rietveld method.

The positive electrode material composition of the present application was obtained by mixing the above-mentioned dielectric material particle and the positive electrode active material. The positive electrode material composition could be further made into a positive electrode and used in a secondary battery.

Preparation example 2

By adjusting the formulation of electrolyte solution, an electrolyte solution with a relative dielectric constant of 90 was prepared. The corresponding relationship between electrolyte solution formulation and relative dielectric constant was shown in the Table below.

Table 2

| | Formulation (volume ratio) | Relative dielectric constant |
|---|---|---|
| Electrolyte solution-90 | EC:EMC=80:20 | 90 |
| Electrolyte solution-70 | EC:EMC=60:40 | 70 |
| Electrolyte solution-30 | EC:EMC=30:70 | 30 |

The test method of relative dielectric constant of the electrolyte solution was as follows:
In the present application, the relative dielectric constants of the dielectric material particle and the electrolyte solution could be determined by a relative dielectric constant tester, with particular reference to GB/T5594.4-1985, and a ZJD-C relative dielectric constant tester from Beijing Zhonghang Times Instrument Equipment Co. Ltd. can be selected as the instrument.

Example 1

Preparation of full battery: a positive electrode active material lithium nickel cobalt manganate (NCM523, i.e. $LiNi_{0.5}Co_{0.2}Mn_{0.3}O_2$, Dv50=5μm), a binder (PVDF), a conductive agent (acetylene black SP) and a barium titanate particle with a relative dielectric constant of 90 (BTO-90) were mixed in a weight ratio of 97: 1: 1: 1, N-methyl pyrrolidone (NMP) was added as a solvent, and the slurry was stirred under vacuum until uniform. The obtained slurry was coated on an aluminum foil of 13μm with a doctor blade at an areal density of 13.7mg/cm$^2$, then oven dried at 140°C and cold pressed. A positive electrode film containing the positive electrode active material and the dielectric material particle (barium titanate particle) was formed on the aluminum foil. After slitting, a positive electrode plate was obtained.

Preparation of negative electrode plate: a negative electrode active material artificial graphite, a conductive agent (acetylene black), a binder styrene butadiene rubber (SBR) and a dispersant sodium carboxymethyl cellulose (CMC) were dissolved in a weight ratio of 97:1:1:1 in solvent deionized water, stirred and mixed uniformly to obtain a negative electrode slurry. The negative electrode slurry was uniformly coated on a negative electrode current collector copper foil of 7μm at a coating density of 9.7mg/cm$^2$, and the negative electrode plate was obtained after oven drying, cold pressing and slitting.

Electrolyte solution: the electrolyte solution prepared above with a relative dielectric constant of 90 was used.

Separator: a commercially available PP-PE copolymer microporous film with a thickness of 20μm and an average pore size of 80nm (from Zhuogao Electronic Tech Company, model 20) was used.

The positive electrode plate, the separator and the negative electrode plate were stacked in sequence, so that the separator was located between the positive electrode plate and the negative electrode plate for isolation, and a bare battery cell was obtained by winding. The bare battery cell was placed in an outer package, injected with the above-mentioned electrolyte solution and encapsulated to obtain a secondary battery.

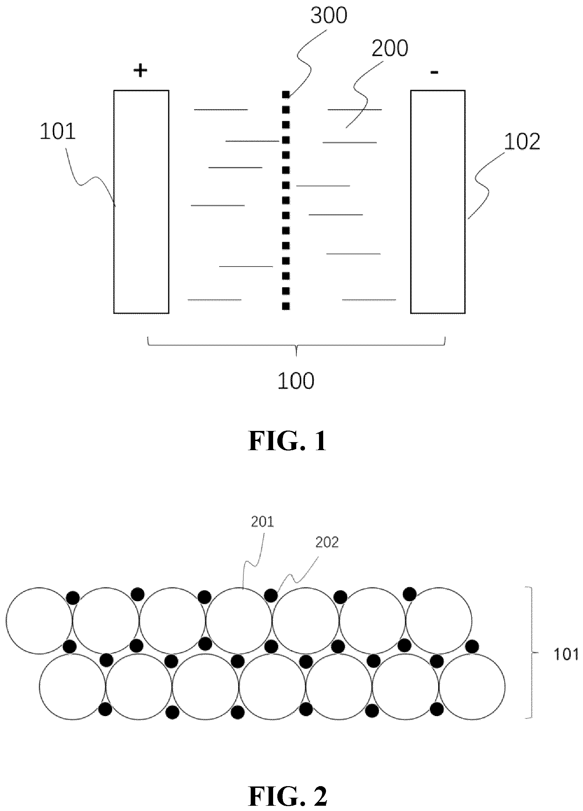

Fig. 1 shows a schematic view of a battery. The battery comprised an electrode film 100 and an electrolyte solution 200, and the electrolyte solution 200 infiltrated the electrode film 100. The electrode film 100 comprised a positive electrode film layer 101 and a negative electrode film layer 102. The battery further comprised a separator 300 that separated the positive electrode film layer 101 from the negative electrode film layer 102. The positive electrode film layer 101 contained the positive electrode active material and the dielectric material particle.

Fig. 2 shows a schematic view of an electrode film. The positive electrode film layer 101 contained the positive electrode active material 201 and the dielectric material particle 202. Optionally, the dielectric material particle 202 were attached to the surface of the positive electrode active material 201.

Examples 1a-1b and Comparative example 1

The difference between Example 1a and Example 1 was that the barium titanate particle with a relative dielectric constant of 60 (BTO-60) was used in place of the barium titanate particle with a relative dielectric constant of 90 (BTO-90).

The difference between Example 1b and Example 1 was that the barium titanate particle with a relative dielectric constant of 120 (BTO-120) was used in place of the barium titanate particle with a relative dielectric constant of 90 (BTO-90).

The difference between Comparative example 1 and Example 1 was that a conductive carbon black was used in place of the barium titanate particle with a relative dielectric constant of 90 (BTO-90).

Example 2

Preparation of full battery: a positive electrode active material lithium nickel cobalt manganate (NCM811, i.e. $LiNi_{0.8}Co_{0.1}Mn_{0.1}O_2$, Dv50 was 5μm), a binder (PVDF), a conductive agent (acetylene black SP) and a barium titanate particle with a relative dielectric constant of 120 (BTO-120) were mixed in a weight ratio of 97: 1: 1: 1, N-methyl pyrrolidone (NMP) was added as a solvent, and the slurry was stirred under vacuum until uniform. The obtained slurry was coated on an aluminum foil of 13μm with a doctor blade at an areal density of 13.7mg/cm$^2$, then oven dried at 140°C and cold pressed. A positive electrode film containing the positive electrode active material and the dielectric material particle (barium titanate particle) was formed on the aluminum foil. After slitting, a positive electrode plate was obtained.

Preparation of negative electrode plate: a negative electrode active material artificial graphite, a conductive agent (acetylene black), a binder styrene butadiene rubber (SBR) and a dispersant sodium carboxymethyl cellulose (CMC) were dissolved in a weight ratio of 97:1:1:1 in solvent deionized water, stirred and mixed uniformly to obtain a negative electrode slurry. The negative electrode slurry was uniformly coated on a negative electrode current collector copper foil of 7μm at a coating density of 9.7mg/cm$^2$, and the negative electrode plate was obtained after oven drying, cold pressing and slitting.

Electrolyte solution: the electrolyte solution prepared above with a relative dielectric constant of 70 was used.

Separator: a commercially available PP-PE copolymer microporous film with a thickness of 20μm and an average pore size of 80nm (from Zhuogao Electronic Tech Company, model 20) was used.

The positive electrode plate, the separator and the negative electrode plate were stacked in sequence, so that the separator was located between the positive electrode plate and the negative electrode plate for isolation, and a bare battery cell was obtained by winding. The bare battery cell was placed in an outer package, injected with the above-mentioned electrolyte solution and encapsulated to obtain a secondary battery.

Examples 2a-2b and Comparative example 2

The difference between Example 2a and Example 2 was that the barium titanate particle with a relative dielectric constant of 90 (BTO-90) was used in place of the barium titanate particle with a relative dielectric constant of 120 (BTO-120).

The difference between Example 2b and Example 2 was that the barium titanate particle with a relative dielectric constant of 150 (BTO-150) was used in place of the barium titanate particle with a relative dielectric constant of 120 (BTO-120).

The difference between Comparative example 2c and Example 2 was that a conductive carbon black was used in place of the barium titanate particle with a relative dielectric constant of 120 (BTO-120).

Example 3

Preparation of full battery: a positive electrode active material lithium iron phosphate (LiFePO$_4$, Dv50=5$\mu$m), a binder (PVDF), a conductive agent (acetylene black SP) and a barium titanate particle with a relative dielectric constant of 150 (BTO-150) were mixed in a weight ratio of 97: 1: 1: 1, N-methyl pyrrolidone (NMP) was added as a solvent, and the slurry was stirred under vacuum until uniform. The obtained slurry was coated on an aluminum foil of 13$\mu$m with a doctor blade at an areal density of 13.7mg/cm$^2$, then oven dried at 140°C and cold pressed. A positive electrode film containing the positive electrode active material and the dielectric material particle (barium titanate particle) was formed on the aluminum foil. After slitting, a positive electrode plate was obtained.

Preparation of negative electrode plate: a negative electrode active material artificial graphite, a conductive agent (acetylene black), a binder styrene butadiene rubber (SBR) and a dispersant sodium carboxymethyl cellulose (CMC) were dissolved in a weight ratio of 97:1:1:1 in solvent deionized water, stirred and mixed uniformly to obtain a negative electrode slurry. The negative electrode slurry was uniformly coated on a negative electrode current collector copper foil of 7$\mu$m at a coating density of 9.7mg/cm$^2$, and the negative electrode plate was obtained after oven drying, cold pressing and slitting.

Electrolyte solution: the electrolyte solution prepared above with a relative dielectric constant of 30 was used.

Separator: a commercially available PP-PE copolymer microporous film with a thickness of 20$\mu$m and an average pore size of 80nm (from Zhuogao Electronic Tech Company, model 20) was used.

The positive electrode plate, the separator and the negative electrode plate were stacked in sequence, so that the separator was located between the positive electrode plate and the negative electrode plate for isolation, and a bare battery cell was obtained by winding. The bare battery cell was placed in an outer package, injected with the above-mentioned electrolyte solution and encapsulated to obtain a secondary battery.

Examples 3a-3b and Comparative example 3

The difference between Example 3a and Example 3 was that the barium titanate particle with a relative dielectric constant of 120 (BTO-120) was used in place of the barium titanate particle with a relative dielectric constant of 150 (BTO-150).

The difference between Example 3b and Example 3 was that the barium titanate particle with a relative dielectric constant of 180 (BTO-180) was used in place of the barium titanate particle with a relative dielectric constant of 150 (BTO-150).

The difference between Comparative example 3 and Example 3 was that a conductive carbon black was used in place of the barium titanate particle with a relative dielectric constant of 150 (BTO-150).

Comparative examples 4a-4b

The difference between Comparative example 4a and Example 1 was that a dielectric material particle with an A value of 30 (BTO-30) was used in place of the barium titanate particle with a dielectric constant of 90 (BTO-90).

The difference between Comparative example 4b and Example 1 was that a dielectric material particle with an A value of 300 (BTO-300) was used in place of the barium titanate particle with a dielectric constant of 90 (BTO-90).

Analytical detection

1. First coulombic efficiency of negative electrode (ICE)

Under a normal pressure environment at 25°C, a button-type battery was discharged at a constant current of 0.1C rate to a voltage of 0.005V, and then discharged at a constant current of 0.05C rate to a voltage of 0.005V, and the specific discharge capacity at this time was recorded, which was the first lithiation capacity; and then it was charged at a constant current of 0.1C rate to a voltage of 1.5V, and the specific charge capacity at this time was recorded, which was the first delithiation capacity. The button-type battery was tested for 50 cycles of charge and discharge according to the above method, and the delithiation capacity of each cycle was recorded.

$$\text{First coulombic efficiency (\%)} = \text{first delithiation capacity/first lithiation capacity} \times 100\%$$

2. Charging resistance test

In the present application, the kinetic performance of the battery was evaluated by the charging resistance at 25°C and 4C. At 25°C, the lithium-ion batteries prepared in Examples and Comparative examples were discharged to a 50% capacity state, allowed to stand for 30min, and the voltage values V1 were recorded, the batteries were charged at a current A0 corresponding to 4C rate for 10s, and the voltage values V2 corresponding to the end of charging were recorded, and the charging resistance was calculated as: R=(V2-V1)/A0

The experimental results were normalized. The charging resistance value of Comparative example 1 was taken as reference value of 100, and the Examples thereof were scaled in proportion.

(Charging cut-off voltage was 4.3V)

3. Fast-charging cycle life/number of cycles

In the present application, the capacity retention performance of the battery was evaluated by the fast-charging cycle life/number of cycles. At 25°C, the lithium-ion batteries prepared in Examples and Comparative examples were charged at 2C rate and discharged at 1C rate, and subjected to a continuous cycle test in the 3%-97% SOC range, until the capacity of the lithium-ion battery was less than 80% of the initial capacity, and the number of cycles was recorded.

(Charging cut-off voltage was 4.3V).

Table 3

| No. | Raw material component ratio (wt%) | | | | Barium titanate | | | | | Electrolyte solution | Battery performance | | | |
| | Positive electrode active material | Conductive agent | Binder | Barium titanate Particle | Dv50/nm | ε-BTO | A value | a-axis /nm | c-axis /nm | ε-ES | Positive electrode capacity mAh/g | ICE % | Charging resistance | Cycle life /Number of cycles |
|---|---|---|---|---|---|---|---|---|---|---|---|---|---|---|
| Example 1 | NCM523 97% | 1% | 1% | 1% | 100 | 90 | 89 | 0.399 | 0.404 | 90 | 185 | 90 | 101 | 1200 |
| Example 1a | NCM523 97% | 1% | 1% | 1% | 100 | 60 | 59 | 0.399 | 0.404 | 90 | 184 | 89 | 103 | 1180 |
| Example 1b | NCM523 97% | 1% | 1% | 1% | 100 | 120 | 119 | 0.399 | 0.404 | 90 | 183 | 88 | 104 | 1170 |
| Comparative example 1 | NCM523 97% | 2% | 1% | 0% | - | - | - | - | - | 90 | 185 | 90 | 100 | 1150 |
| Example 2 | NCM811 95% | 1% | 1% | 3% | 100 | 120 | 119 | 0.399 | 0.404 | 70 | 194 | 89 | 103 | 1170 |
| Example 2a | NCM811 95% | 1% | 1% | 3% | 100 | 90 | 89 | 0.399 | 0.404 | 70 | 193 | 88 | 104 | 1130 |
| Example 2b | NCM811 95% | 1% | 1% | 3% | 100 | 150 | 148 | 0.399 | 0.404 | 70 | 192 | 88 | 105 | 1160 |
| Comparative example 2 | NCM811 95% | 4% | 1% | 0% | - | - | - | - | - | 70 | 193 | 90 | 100 | 1150 |
| Example 3 | LiFePO$_4$ 93% | 1% | 1% | 5% | 100 | 150 | 148 | 0.399 | 0.404 | 30 | 165 | 88 | 108 | 1500 |
| Example 3a | LiFePO$_4$ 93% | 1% | 1% | 5% | 100 | 120 | 119 | 0.399 | 0.404 | 30 | 164 | 87 | 106 | 1480 |
| Example 3b | LiFePO$_4$ 93% | 1% | 1% | 5% | 100 | 180 | 178 | 0.399 | 0.404 | 30 | 163 | 86 | 105 | 1450 |
| Comparative example 3 | LiFePO$_4$ 93% | 6% | 1% | 0% | - | - | - | - | - | 30 | 166 | 89 | 100 | 1400 |
| Comparative example 4a | NCM523 97% | 1% | 1% | 1% | 100 | 30 | 30 | 0.399 | 0.404 | 90 | 185 | 88 | 100 | 1120 |

| | Raw material component ratio (wt%) | | | | Barium titanate | | | | | Electrolyte solution | Battery performance | | | |
|---|---|---|---|---|---|---|---|---|---|---|---|---|---|---|
| Comparative example 4b | NCM523 | 97% | 1% | 1% | 1% | 100 | 300 | 297 | 0.399 | 0.404 | 90 | 185 | 88 | 105 | 980 |

\* ε-BTO represents the relative dielectric constant of barium titanate, and ε-ES represents the dielectric constant of electrolyte solution
\* a-axis/nm represents the a-axis length of the barium titanate unit cell of tetragonal crystalline form, and c-axis/nm represents the c-axis length of the barium titanate unit cell of tetragonal crystalline form

As can be seen from the above experimental data:
In Examples 1-3, it is critical that the dielectric material particle has an A value of 50-200, wherein A=[$\varepsilon$/(c/a)], $\varepsilon$ is the relative dielectric constant of the dielectric material particle; c is the c-axis length of the unit cell of the dielectric material particle, a is the a-axis length of the unit cell of the dielectric material particle. The battery exhibits: increased specific capacity, improved first-cycle coulombic efficiency, reduced charging resistance and longer cycle life.

The reasons for the improvement of battery performance may be as follows:
During charging and discharging of the battery (such as a lithium-ion battery) at a large current, cations in the positive electrode film will migrate to the interface between the positive electrode active material and the electrolyte solution. As there is a solid electrolyte interface film (CEI film) on the surface of the positive electrode active material, and the barrier for intercalation and deintercalation of solvated cations in the CEI film is relatively high, some cations will accumulate at the interface, resulting in the occurrence of concentration polarization. At the same time, the impedance of the CEI film will slow down the migration rate of cations in the CEI film, thereby resulting in a higher discharge DCR, and reducing the power output of the battery cell as a whole. When the dielectric material particle is excited by an electric field, the positive and negative charge centers of the material center will be separated, thereby generating an internal reverse electric field, and the reverse electric field will form a three-phase interface at the three-phase junction of the electrolyte solution, the dielectric material particle and the positive electrode active material, and the three-phase interface is relatively thin, which will promote the fast intercalation and deintercalation of lithium ions. When the A value of the dielectric material particle is in the range of 50-200, the solvated lithium ions can be fastly intercalated and deintercalated in the CEI film.

Comparative examples 1-3 contained no dielectric material particle, and the batteries failed to exhibit the above-mentioned performance improvements.

In Comparative example 4a, the A value of the dielectric material particle was too small, and the batteries failed to exhibit the above-mentioned performance improvements.

In Comparative example 4b, the A value of the dielectric material particle was too large, and the batteries failed to exhibit the above-mentioned performance improvements.

Additionally, in Examples 1-3, the dielectric constant ratio of the dielectric material particle to the electrolyte solution was 50-200 30-90, and in the above ratio range, the dielectric constant of the dielectric material particle had an impedance matching effect with the dielectric constant of the electrolyte solution, and the secondary battery exhibited one or more of the following improved performances: increased specific capacity, improved first-cycle coulombic efficiency, reduced charging resistance, and longer cycle life.

It should be noted that the present application is not limited to the above embodiments. The above-described embodiments are merely illustrative, and embodiments having substantively the same composition as the technical idea and exerting the same effects within the scope of the technical solution of the present application are all included in the technical scope of the present application. In addition, without departing from the scope of the subject matter of the present application, various modifications applied to the embodiments that can be conceived by those skilled in the art, and other modes constructed by combining some of the constituent elements of the embodiments are also included in the scope of the present application.

**Claims**

1. A positive electrode material composition comprising a positive electrode active material and a dielectric material particle;

    wherein, the dielectric material particle has an A value of 50-200, wherein

    $$A=[\varepsilon/(c/a)]$$

    $\varepsilon$ is the relative dielectric constant of the dielectric material particle;
    c is the c-axis length of the unit cell of the dielectric material particle;
    a is the a-axis length of the unit cell of the dielectric material particle.

2. The positive electrode material composition according to claim 1, having one or more of the following characteristics:

    (1) the relative dielectric constant of the dielectric material particle is 50-200;
    (2) the c-axis length of the unit cell of the dielectric material particle is 0.3nm-0.5nm;
    (3) the a-axis length of the unit cell of the dielectric material particle is 0.3nm-0.5nm.

3. The positive electrode material composition according to any one of claims 1-2, wherein the dielectric material particle is selected from one or more of a barium titanate particle, a lead titanate particle, a lithium niobate particle, a lead zirconate titanate particle, a lead metaniobate particle, and a lead barium lithium niobate particle.

4. The positive electrode material composition according to any one of claims 1-3, wherein the positive electrode active material is selected from one or more of the following:

(1) layered oxide-type positive electrode active material;
(2) spinel-type positive electrode active material;
(3) polyanionic positive electrode active material.

5. The positive electrode material composition according to any one of claims 1-4, wherein the dielectric material particle is a barium titanate particle of tetragonal crystalline form.

6. The positive electrode material composition according to any one of claims 1-5, wherein the volume median particle diameter of the dielectric material particle is 50-100nm.

7. The positive electrode material composition according to any one of claims 1-6, wherein the volume median particle diameter of the positive electrode active material is 4-10$\mu$m.

8. The positive electrode material composition according to any one of claims 1-7, wherein the volume median particle diameter ratio of the dielectric material particle to the positive electrode active material is 1:40-1:200.

9. The positive electrode material composition according to any one of claims 1-8, wherein the dielectric material particle is attached to the surface of the positive electrode active material.

10. The positive electrode material composition according to any one of claims 1-9, wherein the mass ratio of the dielectric material particle to the positive electrode active material is 1:100-10:100.

11. A positive electrode comprising the positive electrode material composition of any one of claims 1-10.

12. A secondary battery comprising a positive electrode film layer and an electrolyte solution;

wherein, the positive electrode film layer comprises the positive electrode material composition of any one of claims 1-10, and the positive electrode material composition comprises the positive electrode active material and the dielectric material particle;
wherein, the relative dielectric constant ratio of the dielectric material particle to the electrolyte solution is 50-200:30-90.

13. An electrical apparatus, comprising the secondary battery of claim 12.

**FIG. 1**

**FIG. 2**

**5**

**FIG. 3**

**5**

53

52

52

51

**FIG. 4**

**FIG. 5**

**FIG. 6**

**FIG. 7**

**FIG. 8**

## INTERNATIONAL SEARCH REPORT

<table>
<tr><td colspan="3">International application No.<br>**PCT/CN2022/105911**</td></tr>
</table>

### A. CLASSIFICATION OF SUBJECT MATTER

H01M 4/62(2006.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 电池, 正极, 阴极, 表面, 包覆, 介电常数, c/a, battery, cell, positive, cathode, surface, coat+, dielectric, constant

### C. DOCUMENTS CONSIDERED TO BE RELEVANT

| Category* | Citation of document, with indication, where appropriate, of the relevant passages | Relevant to claim No. |
|---|---|---|
| Y | JP 2019121607 A (SAMSUNG SDI CO., LTD.) 22 July 2019 (2019-07-22)<br>description, paragraphs 8-98, and figure 1 | 1-13 |
| Y | CN 112189277 A (HONDA MOTOR CO., LTD.) 05 January 2021 (2021-01-05)<br>description, paragraphs 48-113, and embodiment 6 | 1-13 |
| Y | CN 113853700 A (LG CHEMICAL LTD.) 28 December 2021 (2021-12-28)<br>description, paragraphs 22-80 | 1-13 |
| Y | CN 113381020 A (HONDA MOTOR CO., LTD.) 10 September 2021 (2021-09-10)<br>description, paragraphs 14-153 | 1-13 |
| Y | CN 101200368 A (FUJI TITANIUM INDUSTRY CO., LTD.) 18 June 2008 (2008-06-18)<br>description, page 2, paragraph 2, and page 15, paragraph 2 to page 16, paragraph 1 | 1-13 |
| A | CN 110447131 A (MURATA MANUFACTURING CO., LTD.) 12 November 2019 (2019-11-12)<br>entire document | 1-13 |
| A | CN 113707865 A (SHANGHAI UNIVERSITY et al.) 26 November 2021 (2021-11-26)<br>entire document | 1-13 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 November 2022** | **27 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/105911**

| Patent document cited in search report | | | Publication date (day/month/year) | Patent family member(s) | | | Publication date (day/month/year) |
|---|---|---|---|---|---|---|---|
| JP | 2019121607 | A | 22 July 2019 | KR | 20190080707 | A | 08 July 2019 |
| | | | | KR | 102238558 | B1 | 08 April 2021 |
| CN | 112189277 | A | 05 January 2021 | US | 2021202984 | A1 | 01 July 2021 |
| | | | | JP | WO2019225437 | A1 | 17 June 2021 |
| | | | | WO | 2019225437 | A1 | 28 November 2019 |
| CN | 113853700 | A | 28 December 2021 | WO | 2021187961 | A1 | 23 September 2021 |
| | | | | KR | 20210117987 | A | 29 September 2021 |
| | | | | US | 2022246921 | A1 | 04 August 2022 |
| | | | | EP | 3955344 | A1 | 16 February 2022 |
| | | | | JP | 2022529819 | A | 24 June 2022 |
| | | | | EP | 3955344 | A4 | 17 August 2022 |
| CN | 113381020 | A | 10 September 2021 | US | 2021288319 | A1 | 16 September 2021 |
| | | | | JP | 2021144808 | A | 24 September 2021 |
| CN | 101200368 | A | 18 June 2008 | TW | 200844071 | A | 16 November 2008 |
| | | | | KR | 20080047297 | A | 28 May 2008 |
| | | | | JP | 2008127265 | A | 05 June 2008 |
| CN | 110447131 | A | 12 November 2019 | WO | 2018173349 | A1 | 27 September 2018 |
| | | | | US | 2020044243 | A1 | 06 February 2020 |
| | | | | JP | 2018160344 | A | 11 October 2018 |
| | | | | JP | 7091608 | B2 | 28 June 2022 |
| CN | 113707865 | A | 26 November 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 114217139 A